# EUROPÄISCHE PATENTSCHRIFT

(11) **EP 3 959 166 B1**
(45) Veröffentlichungstag und Bekanntmachung des Hinweises auf die Patenterteilung: **19.04.2023**
(21) Anmeldenummer: 20734661.0
(22) Anmeldetag: 16.06.2020
(51) Int. Cl.: B66C 13/46, B66C 23/90

(54) **VERFAHREN ZUM BETRIEB EINES FAHRZEUGKRANS**
METHOD FOR OPERATING A VEHICLE CRANE
PROCÉDÉ DE FONCTIONNEMENT D'UNE GRUE AUTOMOTRICE

(30) Priorität: 21.06.2019 DE 102019116759
(43) Veröffentlichungstag der Anmeldung: 02.03.2022
(73) Patentinhaber: Tadano Demag GmbH, 66482 Zweibrücken (DE)
(72) Erfinder: NEUMANN, Marc, 66482 Zweibrücken (DE); SCHRÖDER, Jürgen, 66482 Zweibrücken (DE); MULLER, Laurent, 67430 Butten (FR); RAGOT, Mathieu, 57230 Bitche (FR)
(74) Vertreter: Moser Götze & Partner Patentanwälte mbB
(86) Internationale Anmeldenummer: PCT/EP2020/066642
(87) Internationale Veröffentlichungsnummer: WO 2020/254332

(56) Entgegenhaltungen:
- EP-A1- 3 037 135
- EP-A1- 3 202 701
- JP-A- 2018 039 477

## Beschreibung

Die Erfindung betrifft ein Verfahren zum Betrieb eines Fahrzeugkrans mit einem Unterwagen mit Auslegerstützen und einem Oberwagen mit einem Gegengewicht, bei dem dem Fahrer eine Live-Ansicht der Umgebung des Fahrzeugkrans angezeigt wird.

Von der Firma Clarion Europe GmbH (https://www.clarion.com/de/de/productsbusiness/surroundeye/) ist es bekannt, über mehrere am Fahrzeug montierte Kameras ein Bild der Lkw-Umgebung aus der Vogelperspektive zu liefern, das auf dem Monitor im Fahrerhaus angezeigt wird. Das System liefert so eine Live-Ansicht auch der Bereiche, die für den Fahrer im toten Winkel liegen, und trägt so zu mehr Sicherheit beim Fahren und Rangieren bei.

Von der Firma Motec GmbH ist ein kamerabasiertes Fahrerassistenzsystem mit 360°-Rundumsicht (https://www.motec-cameras.com/rundumsichtsystem/) bekannt. Ähnliche Kamera-Systeme mit dem Einsatz aktiver Sensorik sind von der Firma ifm electronic GmbH bekannt (https://www.ifm.com/de/de/shared/technologien/3d-smart-sensor-o3m/3d-smart-sensor-o3m).

Bei diesen Systemen wird durch rechnerische Zusammensetzung aus unterschiedlichen Ansichten die aktuelle Rundumsicht in Vogelperspektive erzeugt, die dem Fahrer eine Live-Ansicht der Umgebung des Fahrzeugs ermöglichen. Solche Systeme erlauben es, von Sensoren stammende Umgebungsinformationen der Live-Ansicht zu überlagern.

Aus der DE 10 2016 004 382 A1 ist die Verwendung von Bauwerkdatenmodellen (building information modelling, BIM) zur Simulation des Baumaschinenbetriebs bekannt, wobei zur Realitätssteigerung der simulierten Nachbildung der virtuellen Darstellung Live-Bilder überlagert werden.

Des Weiteren offenbart die Patentschrift DE 11 2016 000 127 B4 bereits eine Umgebungsüberwachungsvorrichtung für einen Minenbagger, um den Baggerfahrer beim Beladen eines Kipplasters zu unterstützen. Hierfür wird dem Baggerfahrer über an dem Minenbagger angeordnete Kameras auf einem Monitor ein Livebild des Minenbaggers und seiner Umgebung in einer Vogelperspektive angezeigt. In dieses Live-Bild werden ringförmige Abstandsbereiche um den Minenbagger herum eingeblendet, die farbig hinterlegt werden. Zusätzlich wird dem Baggerfahrer ein Einzelbild in einer wählbaren Richtung angezeigt, beispielsweise in Richtung des zu beladenen Kipplasters. Außerdem sind an dem Minenbagger Sensoren angeordnet, über die Signale an den Baggerfahrer ausgelöst werden, wenn sich Hindernisse in die Abstandsbereiche hinein bewegen. Weitere Überwachungsvorrichtungen für Bagger, die dem Baggerfahrer Live-Bilder der Umgebung zur Verfügung stellen, sind in der europäischen Offenlegungsschrift EP 2 570 556 A1 und der Offenlegungsschrift US 2016/0024758 A1 beschrieben.

Außerdem ist in der europäischen Offenlegungsschrift EP 3 235 773 A2 bereits eine weitere Umgebungsüberwachungsvorrichtung für einen Fahrzeugkran beschrieben.

Der Fahrzeugkran besteht in üblicher Weise aus einem Unterwagen mit Auslegerstützen und einem Oberwagen mit einem Gegengewicht und einem Teleskopausleger. An der Spitze des aufgerichteten Teleskopauslegers ist eine Stereokamera angeordnet, mit der eine dreidimensionale Position eines Objektes im Arbeitsbereich des Fahrzeugkrans bestimmt werden kann.

Aus der europäischen Offenlegungsschrift EP 3 202 701 A1 ist ein weiteres visuelles Überwachungssystem für einen Fahrzeugkran bekannt, das ein Vorhandensein, eine Länge und/oder eine Position von ausfahrbaren Auslegerstützen des Fahrzeugkrans mittels einer oder mehrerer Kameras observiert. Das Überwachungssystem kann auch benutzt werden, um die Umgebung des Fahrzeugkrans zu überwachen, um Objekte im Bewegungsbereich der Auslegerstützen oder anderer Komponenten des Fahrzeugkrans zu erkennen. Die EP 3 202 701 A1 offenbart ein Verfahren gemäß dem Oberbegriff des unabhängigen Anspruchs 1.

Vorliegend besteht die Aufgabe der vorliegenden Erfindung darin, eine Möglichkeit zum Betrieb des Fahrzeugkrans bereitzustellen, die ein sicheres und vereinfachtes Rangieren und Benutzen erlaubt. Diese Aufgabe wird durch das in Anspruch 1 wiedergegebene Verfahren gelöst. Diese robuste Lösung erlaubt auch einen Einsatz in den teils harschen Umweltbedingungen der Fahrzeugkrane. Vorteilhafte Ausgestaltungen ergeben sich aus den Unteransprüchen und der Beschreibung. Erfindungsgemäß wird bei einem Verfahren zum Betrieb eines Fahrzeugkrans mit einem Unterwagen mit Auslegerstützen und einem Oberwagen mit einem Gegengewicht, bei dem dem Fahrer eine Live-Ansicht der Umgebung des Fahrzeugkrans angezeigt wird, eine Möglichkeit zum Betrieb des Fahrzeugkrans, die ein sicheres und vereinfachtes Rangieren und Benutzen erlaubt, dadurch bereitgestellt, dass die Live-Ansicht mindestens über an dem Unterwagen angeordnete Kameras erstellt wird, der Live-Ansicht Kennzeichnungen der Bewegungsbereiche der Auslegerstützen und des Schwenkbereichs des Oberwagens maßstabsgerecht überlagert werden, die Kennzeichnungen festprogrammierte kranspezifische Einblendungen sind und die Live-Ansicht eine kranspezifische und hinsichtlich Abmessungen kalibrierte Ansicht ist. Die kalibrierte Ansicht ist hinsichtlich Entfernungen und Größen des Fahrzeugkrans und seiner Umgebung justiert. Die fest hinterlegten Bewegungsbereiche können so maßstabsgerecht in das Live-Bild eingeblendet werden. Es werden also für jeden Fahrzeugkran einzeln und spezifisch Bewegungsbereiche seiner Teile, wie Oberwagenschwenkbereich, Auslegerstützen-Ausfahrlängen etc., bestimmt (kalibriert) und diese in der Steuerung zur Erzeugung der Überblendungen (Überlagerungen) fest hinterlegt. Die Kennzeichnungen der Bewegungsbereiche der Auslegerstützen und/oder Kennzeichnungen der Bewegungsbereiche des Oberwagenschwenkbereichs sind also festprogrammierte kranspezifische Einblendungen.

Es ist erfindungsgemäß erkannt worden, dass, wenn der Live-Ansicht Kennzeichnungen der Bewegungsbereiche des Krans oder seiner Teile maßstabsgerecht überlagert werden, es möglich ist, dem Fahrer auf einfache Weise anzuzeigen, ob der Kran bzw. Teile dessen gefahrlos in der Umgebung platziert bzw. bewegt werden können oder ob eine Bewegungseinschränkung vorliegt.

Mit anderen Worten, es werden dem Live-Bild fest vorgegebene und eingestellte Markierungen angezeigt bzw. eingeblendet, die den entsprechenden Bewegungsbereich kennzeichnen, so dass der Fahrer ohne Weiteres erkennen kann, ob z. B. ein Drehen des Oberwagens zum Anstoßen des Gegengewichts an einer Hauswand führen würde oder ob z. B. die Auslegerstützen nur zur Hälfte ausfahrbar sind, ohne mit einem Hindernis zu kollidieren. Die Erfindung kommt dazu ohne zusätzliche Sensorik aus, die zudem unter den Einsatzbedingungen fehleranfällig sein kann und zusätzliche Wartung nötig macht.

Dabei können die Kennzeichnungen für den Fahrzeugkran definierte, insbesondere minimale und maximale, Bewegungsbereiche umfassen. So kann z. B. eine minimale Bewegungsstellung grün und eine maximale Bewegungsstellung rot gekennzeichnet werden. In der Überblendung würden dann beide Kennzeichnungen dem Live-Bild überlagert, so dass dem Fahrer (oder Bediener) eine schnelle und sichere Einschätzung möglich wird.

Besonders bevorzugt ist es, wenn die Live-Ansicht eine 360 Grad Vogelperspektive, insbesondere als Übersicht des kompletten Fahrzeugkrans innerhalb seiner unmittelbaren Umgebung, ist. Es ist jedoch denkbar, dass die Vogelperspektive nur Ansichten der Bereiche des Krans zeigt, in denen bewegliche Komponenten mit potentieller Bewegungseinschränkung angeordnet sind. So kann auch eine 270 Grad Front- und Heckansicht ausreichend sein.

Sinnvoll kann es sein, wenn der Mittelpunkt der Vogelperspektive der Kranlängs- und -quermittelpunkt des Fahrzeugkrans ist.

Als Fahrzeugkran werden vorliegend Mobilkrane mit Teleskopausleger oder Raupenkrane mit Gittermastausleger verstanden.

Weitere Details der Erfindung ergeben sich aus der nachfolgenden Beschreibung von Ausführungsbeispielen anhand der Zeichnungen, in denen
Figur 1 eine schematische vogelperspektivische Live-Ansicht auf einen Fahrzeugkran mit eingeblendeten Kennzeichnungen für die Bewegungsbereiche der Auslegerstützen und
Figur 2eine schematische vogelperspektivische Live-Ansicht auf einen Fahrzeugkran mit eingeblendeten Kennzeichnungen für den Bewegungsbereich des Oberwagens im Bereich des Gegengewichts zeigen.

In den Figuren ist jeweils eine schematische vogelperspektivische Live-Ansicht der Umgebung auf einen als Ganzes mit 1 bezeichneten Fahrzeugkrans dargestellt.

Der Fahrzeugkran 1 umfasst einen Unterwagen 2 und einen Oberwagen 3. Der Unterwagen 2 weist eine Fahrerkabine 4 und sechs Achsen 5 mit jeweils zwei straßentauglichen und gummibereiften Rädern 6 auf. Der Unterwagen 2 kann selbstverständlich mehr oder weniger als sechs Fahrzeugachsen 5 oder alternativ ein Raupenfahrwerk aufweisen. Auf dem Unterwagen 2 ist der Oberwagen 3 um eine vertikal ausgerichtete Drehachse D schwenkbar gelagert. Oberwagen 3 und Unterwagen 2 können alternativ auch starr aufeinander montiert sein. Auf dem um die vertikale Achse D schwenkbaren Oberwagen 3 ist ein Hauptausleger 7, welcher als Teleskopausleger konzipiert ist, angeordnet. Auf der dem Hauptausleger 7 abgewandten Seite des Oberwagens 3 ist ein überstehendes Gegengewicht 8 angeordnet.

Der Unterwagen 2 weist jeweils zwei nach links und zwei nach rechts ausfahrbare Auslegerstützen 9 auf.

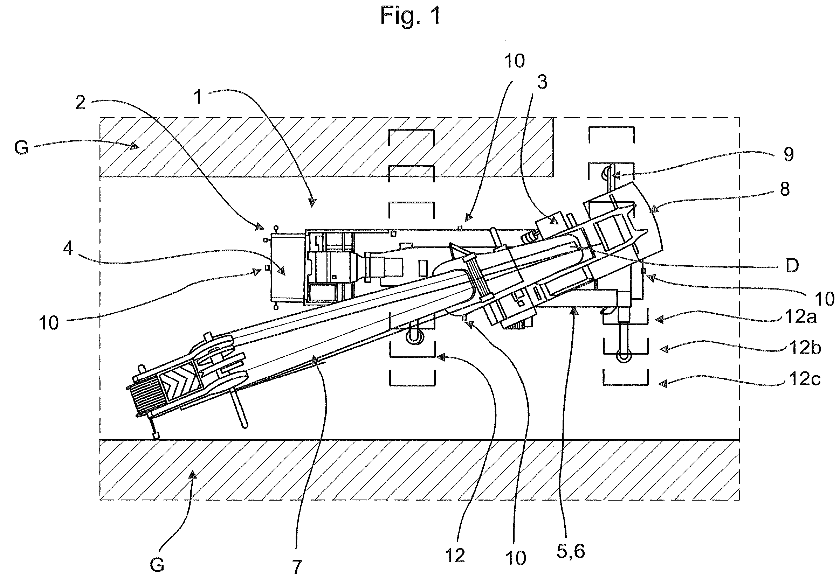

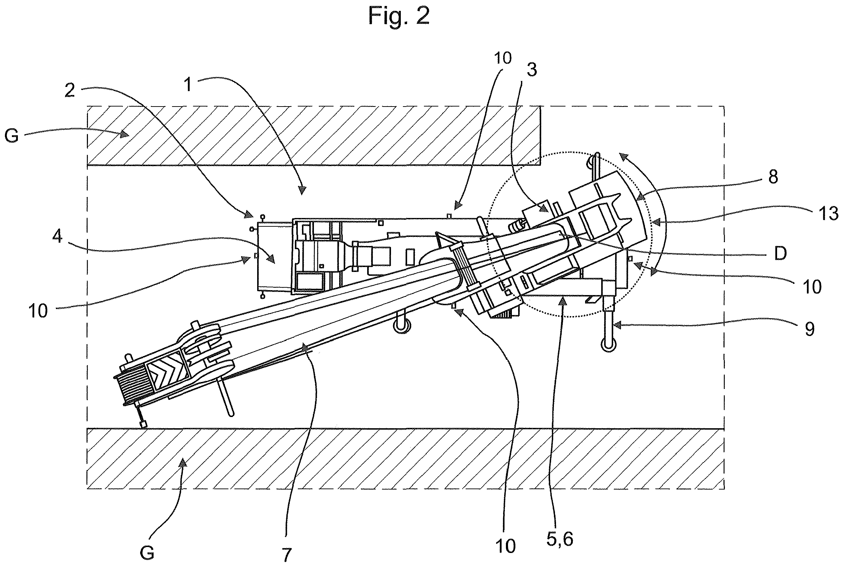

Die vogelperspektivische Live-Ansicht ist eine hinsichtlich Abmessungen und Maßstab kalibrierte Ansicht der Umgebung des Fahrzeugkrans 1 und wird rechnerisch in einer nicht gezeigten Steuerung vorliegend aus vier Kameras 10 erzeugt, die vorne, hinten und jeweils seitlich am Unterwagen 2 des Fahrzeugskrans 1 angeordnet sind. Bei größeren Fahrzeugkranen können entsprechend der Notwendigkeit weitere Kameras, z. B. zwei pro Längsseite, eingesetzt werden, um die 360 Grad Abdeckung zu erhalten. Die vogelperspektivische Live-Ansicht wird immer nur aus einer kalibrierten Ansicht des Fahrzeugkrans 1 generiert. Außerdem ist die vogelperspektivische Live-Ansicht nur "live" in Bezug auf die unmittelbare Umgebung um den Fahrzeugkran 1 herum, die den Arbeitsbereich des Fahrzeugkrans 1 abdeckt. In der Live-Ansicht sind die Draufsichten auf den Fahrzeugkran 1 an sich nur symbolische Fotos, die nur die Situation erläutern sollen. In den vorliegenden Figuren 1 und 2 ist ein Fahrzeugkran 1 mit aufgerichtetem Ausleger 7 dargestellt. In Realität beziehungsweise der tatsächlichen Umsetzung der Erfindung wird der Fahrzeugkran 1 im Straßenfahrzustand mit abgelegtem Ausleger 7 von oben dargestellt. Somit kann der Fahrer des Fahrzeugkrans 1, wenn er auf die Baustelle ankommt, gleich seinen Fahrzeugkran 1 für die Positionierung der Auslegerstützen 9 korrekt ausrichten. Um den Schwenkbereich des Oberwagens 3 mit der Kennzeichnung 13 darstellen zu können, ist auch denkbar, eine andere symbolische Darstellung des Fahrzeugkrans 1 aus einer Datei reinzuladen. Allerdings könnte auch in der symbolischen Darstellung des Fahrzeugkrans 1 im Straßenfahrzustand als Overlay die Kennzeichnung 13 dargestellt werden. Ein echtes "Livebild" des Fahrzeugkrans 1 an sich gibt es nicht.

In diese Live-Ansicht werden Markierungen in Form von Kennzeichen 12, 12b, 12c für die Bewegungsbereiche der Auslegerstützen 9 bzw. des beim Schwenken des Oberwagens 3 auftretender Bewegungsbereich des vorstehenden Gegengewichts 8 des Oberwagen 3 eingeblendet bzw. überlagert.

Die dazu erforderlichen Bewegungsdaten der Auslegerstützen 9 und der Schwenkbewegung des Gegengewichts 8 sind für jeden Kran unterschiedlich bzw. spezifisch bestimmt worden und fest hinterlegt, so dass sie dem Live-Bild maßstabsgerecht überlagert werden können.

Es werden also für jeden Kran einzeln und spezifisch Bewegungsbereiche des Schwenkbereichs des Oberwagens 8 und der Ausfahrlängen der Auslegerstützen 9 bestimmt und diese in der Steuerung zur Erzeugung der Überblendungen (Überlagerungen) fest hinterlegt. Die Kennzeichnungen der Bewegungsbereiche sind also festprogrammierte, kranspezifische Einblendungen.

So ist in Figur 1 für jede der vier Auslegerstützen 9 eine Kennzeichnung 12a, b, c für die minimale und die maximale sowie die mittlere Ausfahrlänge grün, rot und gelb dargestellt. Zusätzlich können die Kennzeichnungen auch Ausfahrlängenangaben in Metern enthalten.

In der Figur 2 ist eine Kennzeichnung 13 für den Schwenkbereich des Oberwagens 8 kreisförmig um dessen Drehachse D dargestellt.

Man erkennt, dass die erfindungsgemäße Darstellung dem Fahrer bzw. Bediener sofort erlaubt, zu erkennen, dass die in Fahrtrichtung rechts liegenden Auslegerstützen 9 nicht ohne Kollision mit dem Gebäude G mehr als minimal ausgefahren werden dürfen.

Analog ist zu erkennen, dass für das Gegengewicht 8 bei Drehung des Oberwagens gegen den Uhrzeigersinn auf etwa 11 Uhr ebenfalls eine Kollisionsgefahr mit dem Gebäude G besteht.

### Bezugszeichenliste

1 Fahrzeugkran
2 Unterwagen
3 Oberwagen
4 Fahrerkabine
5 Achsen
6 Räder
7 Hauptausleger
8 Oberwagen
9 Auslegerstützen
10 Kameras
12a Kennzeichnung
12b Kennzeichnung
12c Kennzeichnung
13 Kennzeichnung
G Gebäude

## Patentansprüche

1. Verfahren zum Betrieb eines Fahrzeugkrans (1) mit einem Unterwagen (2) mit Auslegerstützen (9) und einem Oberwagen (3) mit einem Gegengewicht (8), bei dem dem Fahrer eine Live-Ansicht der Umgebung des Fahrzeugkrans (1) angezeigt wird, **dadurch gekennzeichnet, dass** die Live-Ansicht mindestens über an dem Unterwagen (2) angeordnete Kameras (10) erstellt wird, der Live-Ansicht Kennzeichnungen (12a-c, 13) der Bewegungsbereiche der Auslegerstützen (9) und des Schwenkbereichs des Oberwagens (3) maßstabsgerecht überlagert werden, die Kennzeichnungen (12a-c, 13) festprogrammierte kranspezifische Einblendungen sind und die Live-Ansicht eine kranspezifische und hinsichtlich Abmessungen kalibrierte Ansicht ist.

2. Verfahren nach Anspruch 1, **dadurch gekennzeichnet, dass** die Live-Ansicht eine 360 Grad Vogelperspektive ist.

3. Verfahren nach Anspruch 2, **dadurch gekennzeichnet, dass** der Mittelpunkt der Vogelperspektive der Kranlängs- und -quermittelpunkt des Fahrzeugkrans ist.

4. Verfahren nach einem der vorhergehenden Ansprüche, **dadurch gekennzeichnet, dass** die Kennzeichnungen (12a-c; 13) für den Fahrzeugkran (1) definierte, insbesondere minimale und maximale, Bewegungsbereiche umfassen.

## Claims

1. Method for operating a vehicle crane (1) having a lower carriage (2) with jib supports (9) and a superstructure (3) with a counterweight (8), in which a live view of the surroundings of the vehicle crane (1) is displayed to the driver, **characterised in that** the live view is generated at least via cameras (10) arranged on the lower carriage (2), identifications (12a-c, 13) of the movement ranges of the jib supports (9) and of the pivoting range of the superstructure (3) are superposed, to scale, onto the live view, the identifications (12a-c, 13) are fixed-programmed, crane-specific overlays and the live view is a crane-specific view calibrated in terms of dimensions.

2. Method as claimed in claim 1, **characterised in that** the live view is a 360 degree bird's-eye view.

3. Method as claimed in claim 2, **characterised in that** the centre point of the bird's-eye view is the crane longitudinal and transverse centre point of the vehicle crane.

4. Method as claimed in any one of the preceding claims, **characterised in that** the identifications (12a-c; 13) for the vehicle crane (1) include defined, in particular minimum and maximum, movement ranges.

## Revendications

1. Procédé de fonctionnement d'une grue automotrice (1) comprenant un châssis (2) pourvu de stabilisateurs (9) et une superstructure (3) pourvue d'un contrepoids (8), procédé dans lequel une vue en direct de l'environnement de la grue automotrice (1) est présentée au conducteur, **caractérisée en ce que** la vue en direct est créée au moins par le biais de caméras (10) qui sont placées sur le châssis (2), des marquages (12a-c, 13) des zones de mouvement des stabilisateurs (9) et de la zone de pivotement de la superstructure (3) sont superposées à l'échelle à la vue en direct, les marquages (12a-c, 13) sont des surimpressions spécifiques à la grue et programmées de manière fixe, et la vue en direct est une vue spécifique à la grue et dimensionnellement calibrée.

2. Procédé selon la revendication 1, **caractérisé en ce que** la vue en direct est une vue à vol d'oiseau sur 360 degrés.

3. Procédé selon la revendication 2, **caractérisé en ce que** le centre de la vue à vol d'oiseau est le centre longitudinal et transversal de la grue automotrice.

4. Procédé selon l'une des revendications précédentes, **caractérisé en ce que** les marquages (12a-c ; 13) de la grue automotrice (1) comportent des zones de mouvement définies, notamment minimale et maximale.
